Europäisches Patentamt

European Patent Office

Office européen des brevets

(11) Publication number : **0 475 679 A1**

# (12) EUROPEAN PATENT APPLICATION

(21) Application number : **91308129.5**

(22) Date of filing : **05.09.91**

(51) Int. Cl.⁵ : **B64D 10/00,** G02B 27/00, A42B 3/04

(30) Priority : **14.09.90 GB 9020072**

(43) Date of publication of application :
**18.03.92 Bulletin 92/12**

(84) Designated Contracting States :
**BE CH DE DK ES FR IT LI NL SE**

(71) Applicant : **GEC-FERRANTI DEFENCE
SYSTEMS LTD.
The Grove, Warren Lane
Stanmore, Middlesex HA7 4LY (GB)**

(72) Inventor : **McFarlane, Robert James
2 Kirkton Bank
Penicuik, West Lothian (GB)**
Inventor : **Mason, Robert John
"Coulnakyle", Green Bank Road
Glenfarg, Perth, PH2 9HN (GB)**

(74) Representative : **Waters, Jeffrey
GEC Patent Department, GEC Marconi
Limited, West Hanningfield Road
Great Baddow, Chelmsford, Essex CM2 8HN
(GB)**

(54) **Pilot's helmet.**

(57)    A so-called integrated helmet 1 comprising head tracking means 12 and visor 3 incorporating combiners 15, 16 for displays 17, 18 and having platforms for cameras 19, 20 comprises a stiff frame 2 comprising ribs 4 and 5 which is received in a channel in the helmet and is detachably fastened there. This provides a number of advantages such as ease of mounting and demounting and exchanging components, exchange of the frame between one helmet and another and more rigid coupling between the head tracking means 12 and the reticle on the combiners 15, 16, as well as various ergonomic design advantages.

EP 0 475 679 A1

Jouve, 18, rue Saint-Denis, 75001 PARIS

Fig 1

This invention relates to pilot's helmets.

The invention is particularly applicable to pilot's helmets having head tracking means. Such tracking means is provided in order to allow a missile for example to be directed towards a target simply by the pilot firing it when looking towards the target. The pilot will have a reticle, such as cross-hairs, visible in his visor and will fire the missile when the reticle overlies the target. The tracking means computes how much the head has moved from an initial position in which the reticle is aligned with a straight ahead position when the pilot gets into the cockpit.

There is a tendency for such helmets to incorporate a head-up display which combines via a combiner (a semi-reflecting semi-transmitting component) on the helmet the scene viewed by the pilot with symbols from a display. The symbology desired to be displayed could be dependent on the direction in which the helmet is pointed e.g. it could be a processed and enhanced image of the scene being viewed, and head tracking means can provide a suitable control for the display.

Apart from head tracking means, the display itself may be mounted on the helmet and, in addition a camera for recording the visual input to the pilot (for subsequent training purposes) and an image intensifier may also be mounted on the helmet.

Several problems are thus created with so-called integrated helmets by this proliferation of components mounted on them. Apart from packaging considerations, the components either being external to the helmet and covered or located between the helmet and the liner, the components could cost many thousands of pounds but can only be used by one pilot since the helmet is sized and fitted for that individual pilot. Consequently, the equipment cannot be utilised by another pilot when the first pilot is not using it. Secondly, the components bolted to the helmet will be specific for daytime or nighttime use, and the helmet can only be used for that intended use. Also, each of the components is provided with adjusting means which are invariably complicated and add to the total head supported weight. The equipment cannot be used when the fabric of the helmet itself needs to be repaired. Further, particularly under the high g forces which an aircraft pilot can be expected to meet in practice, the reticle on the combiner (being mounted on the visor) can move slightly relative to the head tracking means (which is usually mounted on the top of the helmet) resulting in inaccuracy of the control signal from the head tracking means.

The invention provides a module for a pilot's helmet, comprising a frame for attachment to the pilot's helmet, a visor mounted on the frame, and head tracking means mounted on the frame.

Such a module can be fitted to different helmets, can be readily adapted for use with different sensors, can be repaired separately from the fabric of the helmet, and enables the provision of a more rigid coupling between the reticle and the head tracking means than hitherto.

A module for a pilot's helmet constructed in accordance with the invention will now be described, by way of example, with reference to the accompanying drawings, in which:

Figure 1 is a front view of the module attached to a helmet; and

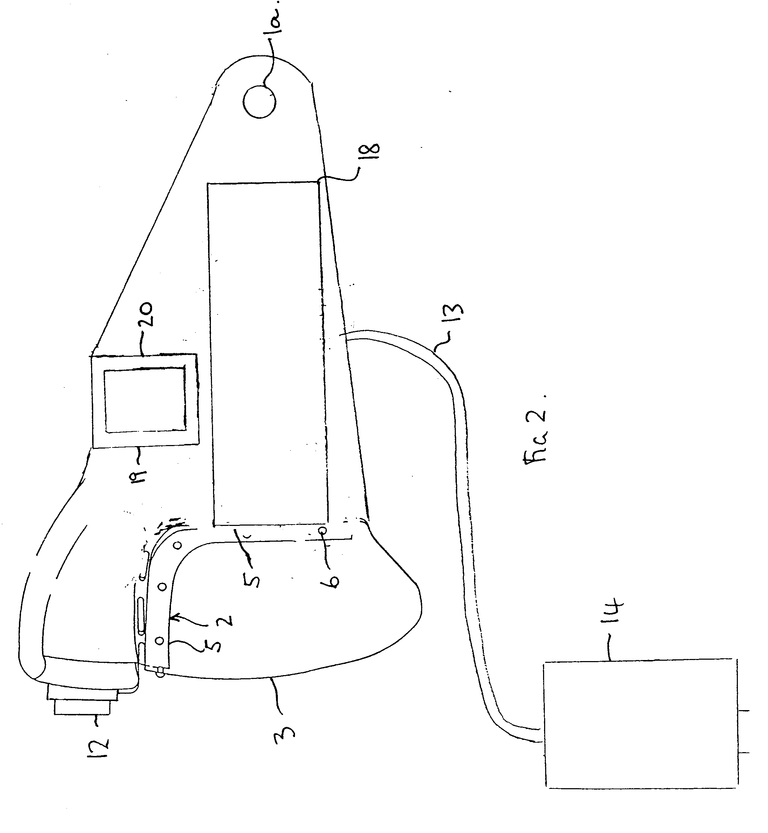

Figure 2 is a side view of the module.

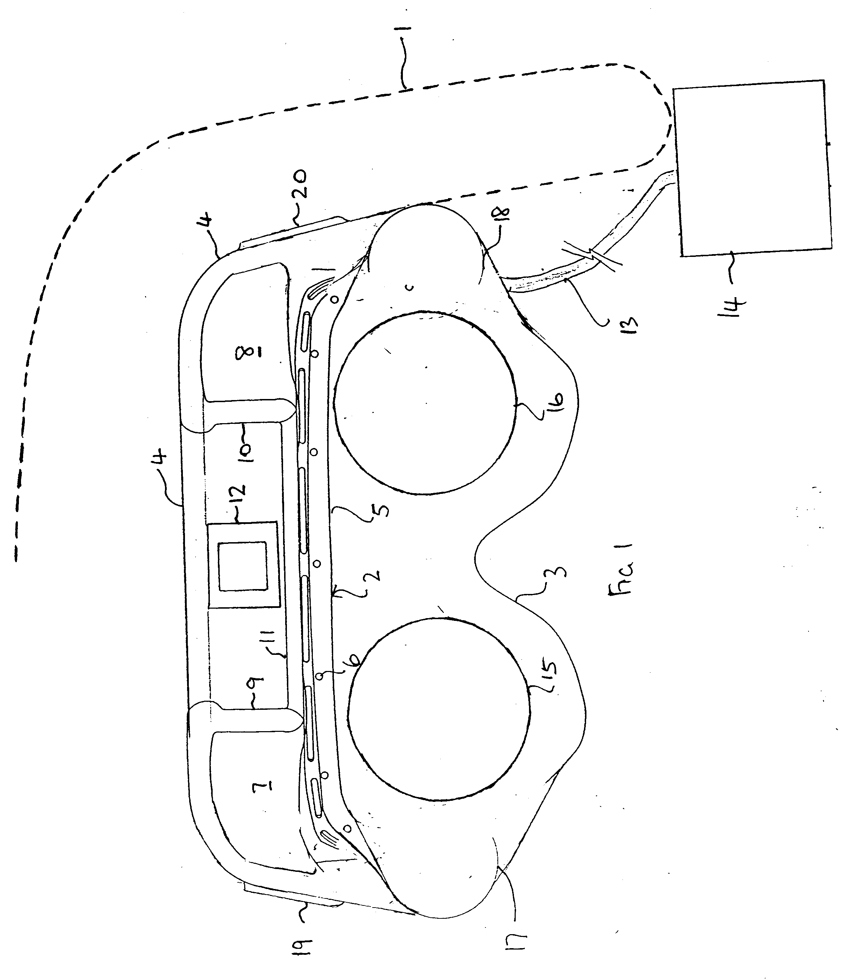

The module is shown attached to a helmet (shown partially in outline in Figure 1) and, in particular, to the brow and cheek regions of the helmet. A module comprises a stiff frame 2 on which various components are mounted and to which a visor 3 is secured.

The frame 2 consists of a upper rib 4 which extends along the brow and down a part of the cheek regions of the helmet and engages in interference fit in a channel in the helmet, the module being secured by snap fasteners 1a; and a lower rib 5 which extends generally parallel to the rib 4, and to which the visor is connected by means of rivets 6. The area between the ribs is integrally formed as a panel, for example, at 7, 8 and further stiffening ribs 9 to 11 are provided in the centre.

In this central region, a head tracking sensor 12 is provided. This may comprise a set of three orthogonal coils arranged to pick up a magnetic field generated in the cockpit by a set of three larger orthogonal coils. The signals so produced in the coils on the helmet are fed by a bundle of conductors 13 to the display drive circuitry 14, which also drives a steering mechanism for missile mounting platforms, and also contains a suitable power supply.

The visor 3 has integral combiner regions 15, 16, which are also each provided with a reticle (not shown). The combiner reflects into the pilot's eye symbology on C.R.T. displays 17, 18 mounted in a fore and aft direction.

The frame 2 also has mounting platforms 19, 20 which can be used alternatively for a CCD camera to record the information seen by the pilot for future training purposes, or for a CCD image intensifier to be viewed via the combiner for nighttime use.

The frame 2 has the advantage that it can be disconnected from one helmet and fitted to another, allowing use by one pilot after another. Various sized helmets can all be provided with one channel size to receive the module or, if necessary, two or three standard helmet channel sizes can be provided, making it only necessary to provide two or three frame sizes. Since the frame is provided with mounting platforms, different components can be readily interchanged on the frame and, since the frame is rigid and because of their proximity, the problem of loose coupling between the head tracking sensor and the reticle is overcome. In addition, the module offers the designer the opportunity to satisfy ergonomic requirements such as streamlining, for safe ejection into a high velocity air stream, balancing the weight of the helmet, positioning of the components to avoid safety critical areas of the helmet and positioning of the components to avoid protrusions which inhibit the freedom to move about within the cockpit area.

Suitable materials for the frame and visor are: carbon fibre for the frame and polycarbonate for the visor. Alternative methods of affixing the module to the helmet in place of snap fasteners are screws or other means. Other methods of head tracking are also possible e.g. photo-emitters or photo-detectors.

## Claims

1. A module for a pilot's helmet, which comprises a frame for attachment to a pilot's helmet, a visor mounted on the frame, and head tracking means mounted on the frame.

2. A module as claimed in claim 1, in which the frame has a channel generally in the shape of an inverted U for reception in a channel in a helmet.

3. A module as claimed in claim 1 or claim 2, including at least one combiner for providing a head-up display.

4. A module as claimed in claim 3, in which the frame also supports the display.

5. A module as claimed in any one of claims 1 to 4, in which the frame includes a mounting platform for a camera.

6. A module as claimed in any one of claims 1 to 5, in which the frame is made of carbon fibre.

7. A helmet including a module as claimed in any one of claims 1 to 6.

Fig 1

EP 0 475 679 A1

Fig 2.

EP 0 475 679 A1

| | European Patent Office | EUROPEAN SEARCH REPORT | Application Number |
|---|---|---|---|

EP    91 30 8129

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 290 293 (HELMETS LIMITED)<br>* column 1, line 21 - line 44 *<br>--- | 1,2,7 | B64D10/00<br>G02B27/00<br>A42B3/04 |
| A | US-A-4 786 966 (HANSON)<br>* column 1, line 58 - column 2, line 18 *<br>* column 6, line 28 - line 59 *<br>--- | 1 | |
| A | US-A-4 347 508 (SPOONER)<br>* the whole document *<br>--- | 1 | |
| A | US-A-4 081 209 (HELLER)<br>* the whole document *<br><br>----- | 1 | |
| | | | **TECHNICAL FIELDS SEARCHED (Int. Cl.5 )**<br><br>B64D<br>G02B<br>A42B |

The present search report has been drawn up for all claims

| Place of search | Date of completion of the search | Examiner |
|---|---|---|
| THE HAGUE | 25 NOVEMBER 1991 | HAUGLUSTAINE |